# EUROPEAN PATENT APPLICATION

(11) **EP 4 475 148 A1**
(43) Date of publication of application: **11.12.2024**
(21) Application number: 23766493.3
(22) Date of filing: 17.02.2023
(51) Int. Cl.: H01F 7/02, G01N 29/24

(54) **HALBACH ARRAY MAGNET, ELECTROMAGNETIC ULTRASONIC SENSOR, DEFECT MEASURING DEVICE, DEFECT MEASURING METHOD, METAL MATERIAL MANUFACTURING METHOD, METAL MATERIAL QUALITY MANAGING METHOD, METAL MATERIAL MANUFACTURING FACILITY, SOLIDIFICATION POSITION MEASURING DEVICE, SOLIDIFICATION POSITION MEASURING METHOD, AND CASTING FACILITY**

(30) Priority: 10.03.2022 JP 2022036856
(71) Applicant: JFE Steel Corporation, Tokyo 100-0011 (JP)
(72) Inventor: NISHIZAWA, Yuji, Tokyo 100-0011 (JP); MIKURIYA, Tomoaki, Tokyo 100-0011 (JP); NAMIKIRI, Yoshiharu, Tokyo 100-0011 (JP); TERADA, Kazuki, Tokyo 100-0011 (JP)
(74) Representative: Hoffmann Eitle
(86) International application number: PCT/JP2023/005666
(87) International publication number: WO 2023/171314

(57) **Abstract**

An object is to provide a Halbach array magnet, an electromagnetic ultrasonic sensor, a defect measurement apparatus, a defect measurement method, a metal material manufacturing method, a metal material quality control method, a metal material manufacturing facility, a solidification position measurement apparatus, a solidification position measurement method, and a casting facility that enable fixation of each magnet arranged and ensure reliability and sensor life even in a repeated heat load or under a water-cooling environment. The Halbach array magnet includes: a magnet unit in which a plurality of magnets is arranged in a Halbach array; a fixing jig that is one or a plurality of non-magnetic materials, the fixing jig being configured to at least fix each of the magnets of the magnet unit; and a yoke 4 that is a magnetic material and is provided on a surface side different from a side where a magnetic field formed by the magnet unit is biased.

## Description

### Field

The present invention relates to a Halbach array magnet, an electromagnetic ultrasonic sensor, a defect measurement apparatus, a defect measurement method, a metal material manufacturing method, a metal material quality control method, a metal material manufacturing facility, a solidification position measurement apparatus, a solidification position measurement method, and a casting facility.

### Background

Recently, electromagnetic ultrasonic waves are widely used in non-destructive measurement. Since electromagnetic ultrasonic waves have characteristics that they can be transmitted to and received from an object in a completely non-contact manner, they are used for material property measurement and inspection of internal and surface flaws. Since a contact medium such as water is not used, they are widely needed for measurement when a measurement target is at a high temperature, material property measurement under temperature control, application to a moving object, or the like. In particular, since the electromagnetic ultrasonic waves are applicable to an object that has a high temperature and moves in a manufacturing line, they are applied to in-line measurement. Specifically, they are used for grasping a solidified state in continuous casting, internal flaw detection, surface flaw detection such as cracking, and the like.

On the other hand, the electromagnetic ultrasonic waves have a problem that they are lower sensitive than conventional ultrasonic probes. Sensitivity of the electromagnetic ultrasonic waves is about two orders of magnitude lower than that of normal ultrasonic waves, and obtaining signal amplitude is a major problem. As a countermeasure, some examples in which magnet arrangement is devised have been reported. For example, Patent Literatures 1 and 2 each discloses a technique called a Halbach array in which a main magnetic pole and an auxiliary magnetic pole are arranged so as to be orthogonal to each other, and a magnetic field is concentrated on one side (measurement target side) to improve magnetic field strength. Since sensitivity of the electromagnetic ultrasonic waves is proportional to the magnetic field strength, the technique can increase the sensitivity. Conventionally, a magnet having the Halbach array has been used in a field using a strong magnetic field such as a linear motor or an accelerator, but has started to be used also in a field of electromagnetic ultrasonic waves for downsizing a sensor and strengthening the magnetic field.

Sensitivity of an electromagnetic ultrasonic sensor is improved when the electromagnetic ultrasonic sensor is brought close to a measurement target, but there has been a limit of bringing the electromagnetic ultrasonic sensor close to a high-temperature target or a moving target. Practically, since measurement is performed at a distance of about 5 mm, there is a great demand for improvement in sensitivity, so the use of a method of strengthening the magnetic field like the Halbach array brings about a significant effect.

### Citation List

### Patent Literature

Patent Literature 1: JP 2017-161454 A
Patent Literature 2: JP 2015-040746 A

### Summary

### Technical Problem

When a magnet (also referred to as a Halbach array magnet) arranged in the Halbach array described above is used for measurement in a state where an object is at a high temperature, such as in a process of manufacturing a metal material, it is necessary to reliably fix the magnet. However, neither of Patent Literatures 1 nor 2 assumes use of the Halbach array magnet under the condition that the metal material has a high temperature. Since each magnet expands and/or contracts due to repeated heat load, and a position of each of the magnets arranged in a row and bonded to each other is shifted, it is difficult to ensure reliability and life of the Halbach array magnet. This is the same under a water-cooling environment.

The present invention has been made in view of the above problems, and it is an object of the present invention to provide a Halbach array magnet, an electromagnetic ultrasonic sensor, a defect measurement apparatus, a defect measurement method, a metal material manufacturing method, a metal material quality control method, a metal material manufacturing facility, a solidification position measurement apparatus, a solidification position measurement method, and a casting facility that enable fixation of each magnet arranged and ensure reliability and sensor life even in a heat load (hereinafter, also referred to as a repeated heat load) repeatedly generated in a process of producing a metal material or under a water-cooling environment, for example. Solution to Problem
(1) To solve the problem and achieve the object, a Halbach array magnet according to the present invention includes: a magnet unit in which a plurality of magnets is arranged in a Halbach array; a fixing jig that is one or a plurality of non-magnetic materials, the fixing jig being configured to at least fix each of the magnets of the magnet unit; and a yoke that is a magnetic material and is provided on a different side of biased magnetic field formed by the magnet unit.
(2) Moreover, in the Halbach array magnet according to the above (1), the fixing jig may: have a columnar shape; and be arranged so as to penetrate all of the magnets.
(3) To solve the problem and achieve the object, an electromagnetic ultrasonic sensor according to the present invention includes: a magnet unit in which a plurality of magnets is arranged in a Halbach array; a fixing jig that is one or a plurality of non-magnetic materials, the fixing jig being configured to at least fix each of the magnets of the magnet unit; and a yoke that is a magnetic material and is provided on a different side of biased magnetic field formed by the magnet unit.
(4) Moreover, in the electromagnetic ultrasonic sensor according the above (3), the fixing jig may: have a columnar shape; and be arranged so as to penetrate all of the magnets.
(5) To solve the problem and achieve the object, a defect measurement apparatus according to the present invention includes the electromagnetic ultrasonic sensor according to the above (3) or (4).
(6) To solve the problem and achieve the object, a defect measurement method according to the present invention uses the electromagnetic ultrasonic sensor according to the above (3) or (4).
(7) To solve the problem and achieve the object, a metal material manufacturing method according to the present invention includes manufacturing a metal material while measuring a specific physical quantity by the measurement method according to the above (6).
(8) To solve the problem and achieve the object, a metal material quality control method according to the present invention includes controlling quality of a metal material while measuring a specific physical quantity by the measurement method according to the above (6).
(9) To solve the problem and achieve the object, a metal material manufacturing facility according to the present invention includes the measurement apparatus according to the above (5), wherein the metal material manufacturing facility is configured to manufacture a metal material while measuring a specific physical quantity by the measurement apparatus according to the above (5).
(10) To solve the problem and achieve the object, a solidification position measurement apparatus according to the present invention includes the electromagnetic ultrasonic sensor according to the above (3) or (4), wherein the solidification position measurement apparatus is configured to measure a solidification position of a metal material by the electromagnetic ultrasonic sensor.
(11) To solve the problem and achieve the object, a solidification position measurement method according to the present invention includes the electromagnetic ultrasonic sensor according to the above (3) or (4), wherein the solidification position measurement method includes measuring a solidification position of a metal material by the electromagnetic ultrasonic sensor.
(12) To solve the problem and achieve the object, a casting facility according to the present invention includes the solidification position measurement apparatus according to the above (10), wherein the casting facility is configured to manufacture a cast piece while measuring a solidification position of the cast piece by the solidification position measurement apparatus.
(13) To solve the problem and achieve the object, a metal material manufacturing facility according to the present invention includes the solidification position measurement apparatus according to the above (10), wherein the metal material manufacturing facility is configured to manufacture a metal material while measuring a solidification position by the solidification position measurement apparatus.
(14) To solve the problem and achieve the object, a metal material manufacturing method according to the present invention is the method of manufacturing a metal material while manufacturing a cast piece using the casting facility according to the above (12).
(15) To solve the problem and achieve the object, a metal material quality control method according to the present invention is the method of controlling quality of a metal material while manufacturing a cast piece using the casting facility according to the above (12).

### Advantageous Effects of Invention

With the Halbach array magnet, the electromagnetic ultrasonic sensor, the defect measurement apparatus, the defect measurement method, the metal material manufacturing method, the metal material quality control method, the metal material manufacturing facility, the solidification position measurement apparatus, the solidification position measurement method, and the casting facility according to the present invention, the Halbach array magnet can be fixed in cooperation with a fixing jig and a yoke without using an adhesive or a frame. Therefore, even in a repeated heat load or in a water-cooling environment, it is possible to fix each magnet arranged, and reliability and sensor life can be ensured.

### Brief Description of Drawings

FIG. 1 is a view comparing an electromagnetic ultrasonic sensor using a Halbach array magnet and an electromagnetic ultrasonic sensor using a conventional array magnet.
FIG. 2 is a view illustrating a stable state of each magnet in a Halbach array.
FIG. 3 is a cross-sectional view illustrating a configuration of an electromagnetic ultrasonic sensor in a mounted state.
FIG. 4 is a view illustrating an expansion/contraction direction of each magnet configuring the Halbach array.
FIG. 5 is a view illustrating a configuration of a Halbach array magnet according to an embodiment of the present invention.
FIG. 6 is a view illustrating a configuration of a modified example of a Halbach array magnet according to an embodiment of the present invention.
FIG. 7 is a view illustrating a configuration of a modified example of a Halbach array magnet according to an embodiment of the present invention.
FIG. 8 is a diagram illustrating a result of static magnetic field simulation performed for three patterns including the Halbach array magnet with or without a through pin and the conventional array magnet.

### Description of Embodiments

A Halbach array magnet, an electromagnetic ultrasonic sensor, a defect measurement apparatus, a defect measurement method, a metal material manufacturing method, a metal material quality control method, a metal material manufacturing facility, a solidification position measurement apparatus, a solidification position measurement method, and a casting facility according to an embodiment of the present invention will be described with reference to the drawings. Note that the present invention is not limited to the following embodiments, and constituent elements in the following embodiments include those that can be easily replaced by those skilled in the art or those that are substantially the same.

### <Characteristics of Halbach Array Magnet>

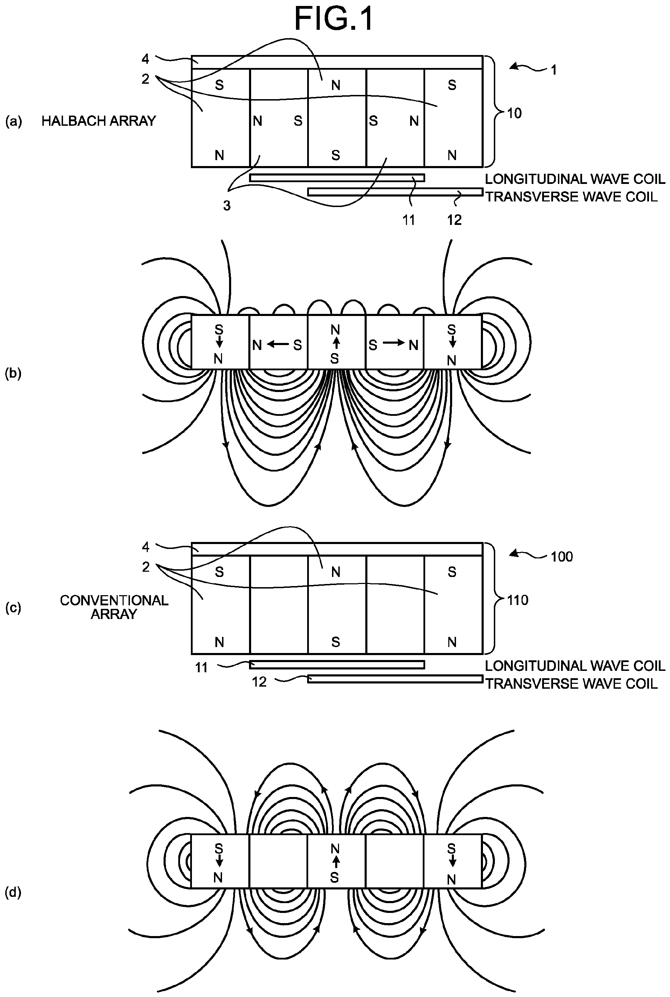

FIG. 1 is a view comparing an electromagnetic ultrasonic sensor 1 using a magnet 10 arranged in a Halbach array (hereinafter, referred to as a Halbach array magnet 10) and an electromagnetic ultrasonic sensor 100 using a conventional array magnet 110. As illustrated in FIG. 1(a), in the Halbach array magnet 10 which is a magnet unit, an auxiliary magnet 3 having a magnetic field direction orthogonal to a main magnet 2 is arranged between the main magnets 2. Therefore, when the Halbach array magnet 10 is assembled, it is necessary to assemble the magnet at a position where the magnetic field repels. FIG. 1(a) illustrates the electromagnetic ultrasonic sensor 1 in which a longitudinal wave coil 11 and a transverse wave coil 12 are arranged with the Halbach array magnet 10. FIG. 1(b) illustrates an example of a magnetic field distribution generated by the Halbach array magnet 10 illustrated in FIG. 1(a) (note that a yoke 4 is omitted in FIG. 1(b)). In addition, FIG. 1(c) illustrates the electromagnetic ultrasonic sensor 100 in which the longitudinal wave coil 11 and the transverse wave coil 12 are arranged with the conventional array magnet 110 from which the auxiliary magnet 3 is removed. FIG. 1(d) illustrates an example of a magnetic field distribution generated by the conventional array magnet 110 illustrated in FIG. 1(b). As is clear from FIG. 1(b) and FIG. 1(d), the Halbach array magnet 10 forms a magnetic field largely biased to the side where the longitudinal wave coil 11 and the transverse wave coil 12 are arranged. Therefore, the electromagnetic ultrasonic sensor 1 using the Halbach array magnet 10 can obtain high sensitivity.

The yoke 4 is attached to a surface on a side opposite to a side where the largely biased magnetic field described above is formed by the Halbach array magnet 10 (referred to as a strong magnetic field side in the present specification) so as to connect the main magnet 2 and the auxiliary magnet 3. By arranging the yoke 4 at this position, the magnetic field of each of the magnets 2 and 3 does not leak to the outside, and a magnetic flux can be efficiently and more easily concentrated to the strong magnetic field side, and the magnetic field on the strong magnetic field side is apparently enhanced. A material of the yoke 4 may be appropriately selected, and a magnetic material such as soft iron having high magnetic permeability is used. In addition, in order to attach the yoke 4 to a water-cooling jacket, an attachment jig, or a sensor holder, the yoke 4 may be appropriately threaded or the like to also serve as an attachment base.

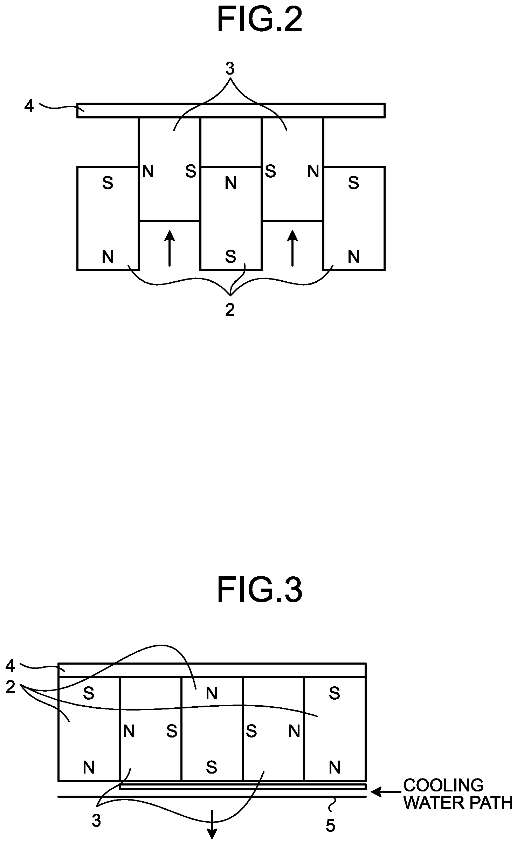

Here, in FIG. 1(a), there is a place where an S pole of the main magnet 2 and an S pole of the auxiliary magnet 3, or an N pole of the main magnet 2 and an N pole of the auxiliary magnet 3 are close to each other. When the Halbach array magnet 10 is actually assembled, the stable state by natural attraction is a state in which the N pole and the S pole are close to each other as illustrated in FIG. 2, and the auxiliary magnet 3 is arranged so as to be shifted from the main magnet 2 in the direction orthogonal to the array.

Therefore, in the case of assembling the Halbach array magnet 10, the Halbach array magnet 10 is assembled from this stable state by fastening the Halbach array in an appropriate state using appropriate jigs, for example, an assembly frame, a vise/clamp, and the like, and fixing/holding the Halbach array magnet with an adhesive or the like. If the Halbach array magnet 10 is not fixed with an adhesive, a frame, or the like, the Halbach array magnet naturally returns to the stable state, and the main magnet 2 and the auxiliary magnet 3 are shifted from each other.

Therefore, the Halbach array magnet 10 is usually fixed with an adhesive or a frame. Although fixation by the frame is used for a motor or the like, it is difficult to use the frame in the electromagnetic ultrasonic sensor. This is because both the magnet and the coil need to be installed as close as possible to a measurement target, and when there is a conductor in the vicinity of the coil, an eddy current is generated in that portion, which affects the sensitivity.

In the case of application to a motor, since a metal frame having high magnetic permeability, for example, soft iron or a laminated electromagnetic steel sheet can be used, sufficient strength can be provided, and since the longitudinal wave coil 11 and the transverse wave coil 12 are not provided, it is not necessary to consider eddy currents in transmission and reception and disturbance thereof. In the electromagnetic ultrasonic sensor, if there is a conductor, an eddy current is generated in the conductor at the time of transmission, and an adverse effect such as a decrease in sensitivity occurs, so a metal frame cannot be used. Although ceramics or the like are also assumed, a thickness is required in order to obtain realistic strength, and the magnetic field strength decreases due to the spread of the magnetic field, and the sensitivity decreases. Therefore, fixing with an adhesive is frequently used in the electromagnetic ultrasonic sensor.

However, when the Halbach array magnet 10 is used for measurement in a state where the measurement target is at a high temperature (for example, a casting process, a hot rolling process, or the like for a metal material, particularly a steel material), it is preferable to take countermeasures against heat. In order to ensure the sensitivity of the electromagnetic ultrasonic sensor, a distance (lift-off) between the electromagnetic ultrasonic sensor and the measurement target is made as small as possible. For this purpose, a region facing the measurement target is reliably cooled. In the case of using in a high temperature state without cooling, there is a high possibility that the coil is damaged or the magnet is demagnetized. A neodymium magnet has particularly strong magnetic force among easily available magnets, and the magnetism decreases at about 80 °C to 150 °C or higher. From the above, it is particularly preferable that cooling is performed by air cooling or water cooling when the measurement is performed in proximity to the high-temperature target. In particular, in measurement at a high temperature at which the measurement target is several hundred degrees, it is more preferable to perform cooling while being set in a sensor jacket and water is made to flow through a gap.

FIG. 3 is a cross-sectional view illustrating a configuration of the electromagnetic ultrasonic sensor in a mounted state. As illustrated in FIG. 3, a Halbach magnet, a coil to which a current pulse is applied, a water passage/spacer on a front surface, a sensor jacket, and a measurement target 5 are arranged in the stated order. As the coil, a coil obtained by winding an enameled wire, a flexible printed circuit board, or the like is used.

In particular, when the electromagnetic ultrasonic sensor is used at a high temperature, although cooling such as water cooling is performed, a flow path tends to be narrow in order to minimize the distance between the electromagnetic ultrasonic sensor and the measurement target 5. As a specific example, a structure is adopted in which a space of 5 mm from the measurement target 5, a SUS cover of 0.2 mm as a water-cooling jacket, and a flow path of 1 mm as a cooling water path are obtained to perform water cooling. Depending on a temperature of the measurement target 5, a temperature of the electromagnetic ultrasonic sensor may rise to about 80 °C or 100 °C due to radiant heat or heat transfer. Furthermore, heat receiving during the measurement, and cooling while the measurement is not performed, is repeated, so a heat load is repeatedly applied.

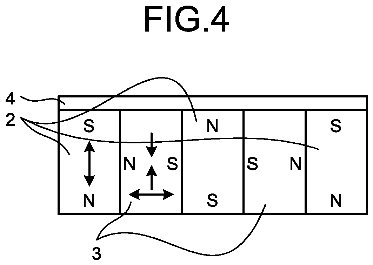

Neodymium magnets are widely used as magnets for electromagnetic ultrasonic sensors because of their relatively low cost and high magnetic flux density. Incidentally, the neodymium magnet has anisotropy of thermal expansion, and has a positive thermal expansion coefficient in a magnetic pole direction and a negative thermal expansion coefficient in a direction orthogonal to the magnetic pole direction. Therefore, when heated, expansion or contraction occurs in the directions schematically illustrated in FIG. 4. The main magnet 2 thermally expands in the magnetic pole direction (up-down direction in the drawing), but the auxiliary magnet 3 extends in the left magnetic pole direction (left-right direction in the drawing) and contracts in the direction orthogonal to the magnetic pole (up-down direction in the drawing) because the magnetic pole direction is a lateral direction. For this reason, a shearing force is generated at an interface of the magnet. When an adhesive for fixing the magnet is used, the shearing force is generated in an adhered portion, leading to peeling of the adhesive. Eventually, the adhesion is lost and the magnet is pushed out in an attempt to return to a stable region.

In addition, for the assembly and adhesion of the Halbach array, a known one is appropriately selected according to the purpose of use. For example, a so-called instant adhesive containing cyanoacrylate as a main component is used in consideration of impact on the Halbach array. An epoxy-based adhesive has strong adhesion and some flexibility after curing, so it is most suitable for bonding Halbach array magnets to each other.

The epoxy-based adhesive has suitable characteristics as described above, but the adhesive has slight water absorbency, and when the adhesive is left in water for a long period of time, the adhesive may expand and peel off due to water absorption. In addition, since hydrolysis proceeds simultaneously with reduction in mechanical adhesive force due to expansion, deterioration particularly proceeds under a submersion environment for water cooling.

As a result, the adhesive is gradually peeled off, and finally, the magnets constituting the Halbach array are detached by a repulsion force and pushed out. Due to pushing out of the magnet, the flow path is blocked and burned, the sensor cover is pushed and deformed, and the coil is damaged (deformation, insulation failure, disconnection, or the like).

In fact, in an electromagnetic ultrasonic sensor using a conventional Halbach array magnet, a malfunction of the electromagnetic ultrasonic sensor occurs due to detachment of the magnet. For example, when the measurement target was subjected to the measurement at a high temperature (measurement target: cast slab, surface temperature: about 900 °C, lift-off: 5 mm, cover material: SUS 304, thickness: 0.2 mm) several times and then confirmed, a cover portion was swollen. As a result of disassembling and checking the inside, it has been confirmed that the magnet is detached and pushed out, the flow path is blocked, and the coil is burned.

### <Halbach Array Magnet>

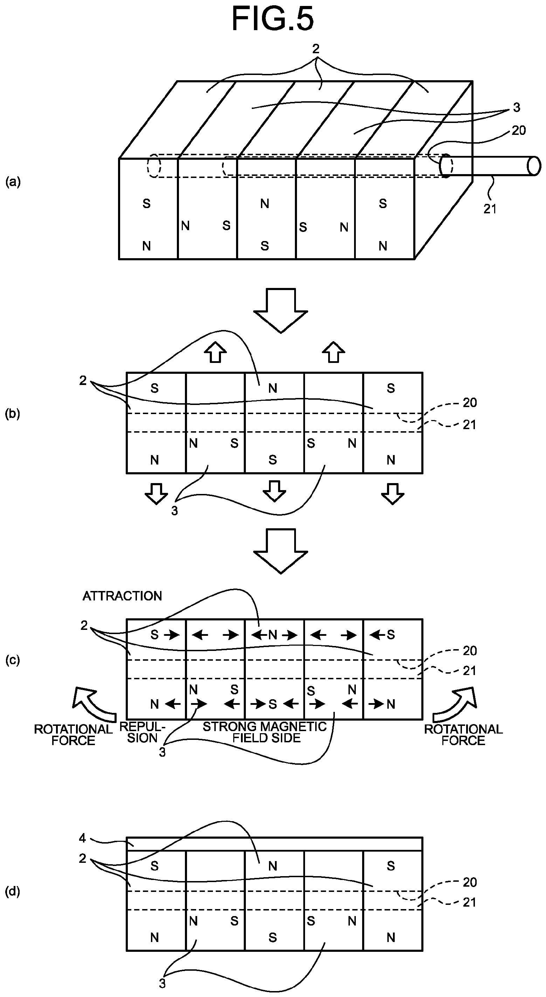

FIG. 5 is a view illustrating a configuration of the Halbach array magnet according to the embodiment of the present invention. As illustrated in FIG. 5(a), the Halbach array magnet is a pinned type. Dimensions and a ratio of longitudinal and lateral heights of the Halbach array magnet are arbitrary, and as an example, five magnets of 20 mm (width) × 30 mm (length) × 40 mm (height) are arranged. These are designed according to the number of magnetic poles to be used and the desired magnetic field strength.

In this Halbach array magnet, a hole 20 is formed in a center portion of each of the magnets (the main magnet 2 and the auxiliary magnet 3). The hole diameter is, for example, 5 mm. It may be appropriately designed according to the size of the original magnet, the strength of the magnetic force, the processing accuracy, and the like.

This hole 20 is at roughly the center of the magnet. The holes 20 are formed at such positions that form a straight line in a state where the Halbach array is formed. Hole processing includes a method of performing hole processing before magnetization and plating, and a method of performing processing on the magnetized magnet. From the viewpoint of manufacturing cost and workability, hole processing is preferably performed before magnetization and plating. If the hole 20 is too large, an effective volume of the magnet decreases, and the magnetic field strength decreases. If the hole 20 is too small, processing becomes difficult. Specifically, the neodymium magnet is plated for rust prevention (nickel plating or the like), but when the hole diameter becomes small, it becomes difficult to plate an inner surface of the hole, and as a result, it becomes easy to rust, and the life is shortened, or the magnetic field strength is reduced due to rust. In addition, since the neodymium magnet is a sintered body, a slight dimensional change may occur in the production process. In view of this, the hole diameter and a pin size may be examined.

In the case of the present embodiment, fasteners are not arranged at both ends of the hole 20. It is most preferable that the fasteners are not arranged at both ends of the Halbach array magnet 10 as described above. With this shape, the two main magnets 2 at both ends of the Halbach array magnet 10 can each move very slightly to a side not in contact with the auxiliary magnet 3. When the fasteners are arranged at both ends of the hole 20, it is preferable to set a distance to such an extent that at least the main magnet 2 at one end can move to the side not in contact with the auxiliary magnet 3 even very slightly. Of course, it is more preferable to set the distance at both ends. Moreover, it is not the present invention to arrange fasteners at both ends of the hole 20 so as to press the main magnets 2 at both ends against the adjacent auxiliary magnet 3 along an axis of a through pin 21.

The position of the hole 20 is preferably the center. First, an end surface affects a magnetic field distribution. The magnetic field strength and the magnetic field distribution have a large influence on transmission/reception sensitivity of electromagnetic ultrasonic waves.

Consideration is given to opening the hole at a position other than the center portion. For example, consideration is given to the case where the hole has been formed at a position of a magnetic field application surface 1/3. Although it is considered that the influence on the magnetic field distribution is smaller than that of the case where the hole is formed at the end, for example, in the main magnet 2, it is necessary to prepare two kinds of magnets. This leads to an increase in cost and a complicated manufacturing procedure. For example, the magnet may be reassembled when the selection of the magnet is wrong, but since the attraction between the magnets is very strong, it may be difficult to remove the magnet. In the central portion, in view of symmetry, only one type of main magnet 2 and one type of auxiliary magnet 3 are required, that is, two types in total are required.

A material of the through pin 21 penetrating through the hole 20 is preferably a SUS material of a non-magnetic material such as SUS 304. Rust or the like is less likely to occur by using SUS. In addition, aluminum, copper, or the like can also be used as long as it is a non-magnetic material, and may be appropriately selected. On the other hand, it is difficult to use a magnetic material because the magnetic material disturbs the magnetic field. During assembly, there is a risk of operational hazards due to strong attraction. In addition, there is a high possibility that the position of the through pin 21 cannot be determined at a specific position due to the magnetic field distribution.

In the magnet manufacturing procedure, first, a Halbach array magnet is assembled. That is, magnets are assembled in a staggered state which is a stable region as illustrated in FIG. 2. Thereafter, the magnets are tightened with a vise or the like to form an integrated Halbach array. As a result, the hole positions coincide with each other, and the through pin 21 is made to pass through the hole 20. Thereafter, the vise is removed, and the Halbach array magnet is completed.

The completed Halbach array magnet has a magnet arrangement in which the main magnet 2 and the auxiliary magnet 3 partially repel each other. In the case of not fixing with an adhesive or the like, the arrangement returns to a stable arrangement, but the arrangement/shape is maintained by the through pin 21.

Thereafter, the longitudinal wave coil 11 and the transverse wave coil 12 are arranged in the same manner as in an electromagnetic ultrasonic sensor using a normal Halbach array to manufacture the electromagnetic ultrasonic sensor. The yoke 4 is arranged by attraction on the side opposite to the side where the longitudinal wave coil 11 and the transverse wave coil 12 are arranged.

According to the method of fixing the Halbach array magnet of the present embodiment, an outer shape is not affected, and the magnetic field strength and the magnetic field distribution are not affected. In addition, it is also advantageous in terms of cost, and it is obvious that the through pin 21 costs less when comparing the cost of producing a frame and the cost of the through pin 21. In addition, even when the magnet is partially broken or the like, it can be easily disassembled as compared with an adhesive, and a part thereof can be easily reused.

Here, since the main magnet 2 and the auxiliary magnet 3 repel each other, the main magnet 2 and the auxiliary magnet 3 try to return to the stable region as illustrated in FIG. 2. At this time, the holes 20 which have been originally in the straight line are displaced and come into contact with the through pin 21. As illustrated in FIG. 5(b), since the holes 20 try to return to the original state while coming into contact, a shearing force is applied to the through pin 21, and the through pin 21 resists, so that the through pin 21 and the holes 20 are engaged with each other and are hardly detached. Note that, at this time, as illustrated in FIG. 5(c), since magnetic poles of the same polarity are arranged next to each other on the strong magnetic field side, the magnetic poles repel each other, and a rotational force is generated in an outer magnet. However, as illustrated in FIG. 5(d), since the yoke 4 is located on the side opposite to the strong magnetic field side, displacement in a direction other than the vertical direction in the drawing, that is, the rotational force can be restrained by the yoke 4. As a result, although with only the through pin 21, displacement occurs so as to open a tip on the strong magnetic field side as illustrated in FIG. 5(c), the magnet can be held in the Halbach array state by the cooperation of the through pin 21 and the yoke 4.

Note that, in the state of FIG. 5(c), the magnetic field of the main magnet 2 and the magnetic field of the auxiliary magnet 3 repel each other on the side where the coil is provided (strong magnetic field side), and the space between the main magnet 2 and the auxiliary magnet 3 is about to be opened. This opening causes the hole 20 to warp and bend toward the strong magnetic field side. This behavior is possible because fasteners are not provided at both ends of the hole 20 and the two main magnets 2 at both ends of the Halbach array magnet 10 can each move very slightly to a side not in contact with the auxiliary magnet 3. At this time, the through pin 21 is engaged with the hole 20 to be more hardly detached. As a result, the adhesive becomes unnecessary. Note that the yoke 4 is attracted by magnetic force on the opposite side. Note that the through pin 21 has a substantially straight line shape in the hole 20. Note that, as described above, the behavior in which the hole 20 is warped toward the strong magnetic field side can be similarly obtained in other forms unless the fasteners are arranged at both ends of the hole 20 so as to press the main magnets 2 at both ends against the adjacent auxiliary magnet 3 along the axis of the through pin 21. That is, in the other forms, when the fasteners are arranged at both ends of the hole 20, a distance is set to such an extent that at least the main magnet 2 at one end can move to the side not in contact with the auxiliary magnet 3 even very slightly, or the distance is set at the both ends.

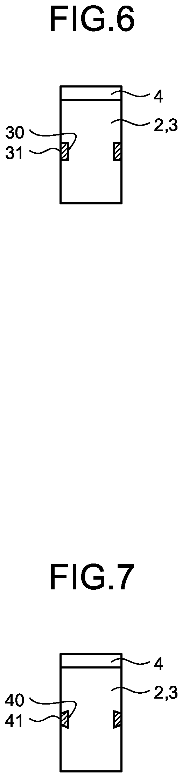

In addition, the through pin 21 and the hole 20 each only need to have a columnar shape extending over the main magnet 2 and the auxiliary magnet 3, and are not limited to a cylinder, and may be a prism. In addition, as illustrated in FIG. 6, instead of the through pin 21 and the hole 20 provided at the center, grooves 30 may be provided on both side surfaces, and engagement members 31 may be fitted into the grooves 30. The engagement member 31 is also engaged by resistance of the engagement member 31 against the displacement of the groove 30 and the shearing force generated when trying to return to the stable region, but in order to further prevent detachment, an engagement member 41 may be fitted into a wedge-shaped groove 40 having a trapezoidal cross section as illustrated in FIG. 7. Note that the groove may have a shape in which a part of the cross section of a circle is missing and the inside bulges.

### <Result of Confirming Magnetic Field Strength>

Here, static magnetic field simulation was performed for three patterns including the Halbach array magnet with or without the through pin 21 and the conventional array magnet. Note that the through pin 21 is the same as that illustrated in FIG. 5. On the basis of an example of dimensions of a practical sensor, 5 magnets of 20 mm (width) × 30 mm (length) × 40 mm (height) were arranged, and a width of 100 mm and its peripheral region were set as an analysis region. As the present embodiment, a model was created in which the hole 20 having a diameter of 5 mm was opened in the center portion of the magnet, and a round rod of SUS 304 having a diameter of 4.5 mm was inserted as the through pin 21. On the opposite side, a steel plate (SS 400) having a plate thickness of 3 mm was attached as a magnetic yoke. As the magnet characteristics, the same value (This may be adopted from the catalog value. For example, 950 kA/m) was set. For other electrical and magnetic characteristics, characteristics of various materials and air characteristics preset in the simulation were set. The magnetic field strength and distribution are analyzed. The analysis was performed by a finite element method.

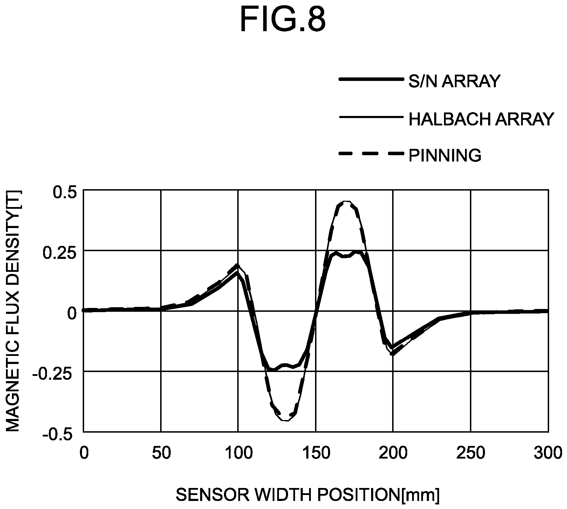

FIG. 8 is a diagram illustrating a comparison result. Note that a component particularly important for generating electromagnetic ultrasonic wave and a component parallel (magnet width direction) to a surface of the sensor used for a longitudinal wave were acquired at a position of 5 mm from the surface. This position corresponds to a surface position of the measurement target, and the value is directly linked to the sensitivity of the electromagnetic ultrasonic sensor.

As illustrated in FIG. 6, it can be seen that the magnetic field strength is significantly improved and uniform by adopting the Halbach array magnet as compared with the conventional array magnet (S/N array). In addition, it has been found that there is almost no difference (about 1 %) in the presence or absence of the through pin 21.

### <Production and Evaluation>

The produced Halbach array magnet is a magnet in which five magnets of 20 (width) × 30 (length) × 40 (height) are arranged, and has a configuration of three main magnets and two auxiliary magnets. The hole 20 of Φ 5 mm was opened in the center of a surface of 30 mm × 40 mm. The through pin 21 was made of SUS 304, and the diameter was selected to be Φ 4.5 mm. The length was 100 mm (20 mm × 5 = 100 mm), which was the same as the width of the magnet.

First, the magnets are alternately arranged, and then tightened with a vise, and the through pin 21 is inserted when the hole positions coincide with each other. Although there was some interference due to manufacturing errors, it was possible to penetrate the through pin 21 by slightly loosening the tightening and adjusting the hole position. After the insertion of the through pin 21, the vise is removed, and a coil is attached to the sensor surface to form an electromagnetic ultrasonic sensor. The sensor coil was made of a flexible printed circuit board, had a sheet shape with a thickness of about 0.5 mm, and was directly attached to the surface of the magnet.

The sensitivity characteristics when used as an electromagnetic ultrasonic sensor were compared with the conventional Halbach array and the conventional array (S/N array) as examples. Note that transmission/reception coils and apparatuses used for transmission and reception of electromagnetic ultrasonic waves other than the magnets are all the same.

A racetrack-type coil made of a pattern of a flexible printed circuit board was used for each of transmission and reception. The coil is directly bonded to the surface of the magnet and a high frequency pulse of a large current is applied. The coil on the reception side was also made of a flexible printed circuit board, amplification was performed by a preamplifier, and then acquired by a PC. For ultrasonic wave propagation, an aluminum block having a thickness of 250 mm was used. The aluminum block was sandwiched between the transmission sensor and the reception sensor, the electromagnetic ultrasonic wave was transmitted and received, and amplitude of a transmission signal was acquired. In addition, the distance from the surface was changed, and the change was monitored while taking it as the sensor lift-off.

As a result, the sensitivity (signal amplitude) was improved twice by adopting the Halbach array. In addition, the lift-off characteristics had substantially the same inclination in all the methods, and the transmission/reception sensitivity was improved by adopting the Halbach array. In addition, no difference occurred due to pinning by the through pin 21.

Life evaluation was performed by subjecting a sensor prototyped using a pinned Halbach array to measurement with an actual continuous cast slab. The measurement target was a cast slab (surface temperature: about 900 °, lift-off: 5 mm), and was placed in a water-cooling jacket, and water-cooling by internal water passage was performed. A distance from a front panel is about 1 mm, and water of 2 liters/minute is constantly refluxed.

In the conventional Halbach array type sensor without the through pin 21, swelling/deformation of the front panel, detachment of the magnet unit, protrusion of the magnet, and burning of the coil occurred after several measurements. On the other hand, in the Halbach array of the pinned type, the deformation of the panel does not occur even after the measurement in 20 times of casting, and the soundness is maintained. The sensor life can be greatly extended while maintaining the sensitivity, which also contributes to improvement in reliability and reduction of maintenance cost.

In the present embodiment, a hole is formed in the central portion of the magnet constituting the Halbach array, and a non-magnetic metal through pin is made to pass through the hole, so that the magnet of the Halbach array can be fixed without using an adhesive or a frame. Since the adhesive is not used, shifting does not occur even when the magnet is thermally expanded and/or contracted under a heat load or a water-cooling environment. As a result, reliability and sensor life can be secured. In addition, since there is no member/structure on a measurement surface, the lift-off does not increase, and the sensitivity of the Halbach array in electromagnetic ultrasonic wave generation can be maintained as it is.

### <Measurement Apparatus, Defect Measurement Apparatus, and Solidification Position Measurement Apparatus>

The electromagnetic ultrasonic sensor according to the above embodiment can be applied to, for example, various measurement apparatuses for a surface layer and/or an inside of a metal material. Then, these measurement apparatuses can measure a specific physical quantity with respect to the surface layer and/or the inside of the metal material using the above-described electromagnetic ultrasonic sensor. More specifically, the measurement apparatus utilizing the electromagnetic ultrasonic sensor can be applied to a defect measurement apparatus or a solidification position measurement apparatus. The defect measurement apparatus can measure a defect on the surface layer and/or in the inside of the metal material using the above-described electromagnetic ultrasonic sensor. Alternatively, the solidification position measurement apparatus can measure a solidified position of the metal material using the above-described electromagnetic ultrasonic sensor. In addition, this measurement apparatus can measure a material property of the metal material (measurement of mechanical characteristics, electromagnetic characteristics, and the like). In particular, unlike a conventional ultrasonic measurement apparatus, it is possible to perform material property measurement under high temperature/temperature control by taking advantage of being able to perform non-contact measurement.

### <Measurement Method, Defect Measurement Method, and Solidification Position Measurement Method>

The electromagnetic ultrasonic sensor according to the above embodiment can be applied to, for example, various measurement methods for a surface layer and/or an inside of a metal material. Then, these measurement methods can measure a specific physical quantity with respect to the surface layer and/or the inside of the metal material using the above-described electromagnetic ultrasonic sensor. More specifically, the measurement method utilizing the electromagnetic ultrasonic sensor can be applied to a defect measurement method or a solidification position measurement method. The defect measurement method can measure a defect on the surface layer and/or in the inside of the metal material using the above-described electromagnetic ultrasonic sensor. Alternatively, the solidification position measurement method can measure a solidified position of the metal material using the above-described electromagnetic ultrasonic sensor. In addition, this measurement method can measure a material property of the metal material (measurement of mechanical characteristics, electromagnetic characteristics, and the like). In particular, unlike a conventional ultrasonic measurement method, it is possible to perform material property measurement under high temperature/temperature control by taking advantage of being able to perform non-contact measurement.

### <Metal Material Manufacturing Method Part 1>

The above-described measurement method can also be applied to, for example, a metal material manufacturing method. In the metal material manufacturing method, the metal material can be manufactured while measuring a specific physical quantity using the measurement method.

The above-described defect measurement method can also be applied to, for example, a metal material manufacturing method. In the metal material manufacturing method, the metal material can be manufactured while measuring a defect using the defect measurement method.

The above-described solidification position measurement method can also be applied to, for example, a metal material manufacturing method. In the metal material manufacturing method, the metal material can be manufactured while measuring a solidification position of the metal material (for example, a cast piece manufactured by casting a metal material) using the solidification position measurement method.

### <Metal Material Quality Control Method Part 1>

The above-described measurement method can also be applied to, for example, a metal material quality control method. In the metal material quality control method, quality of the metal material can be controlled while measuring a specific physical quantity using the measurement method.

The above-described defect measurement method can also be applied to, for example, the metal material quality control method. In the metal material quality control method, quality of the metal material can be controlled while measuring a defect using the defect measurement method.

The above-described solidification position measurement method can also be applied to, for example, the metal material quality control method. In the metal material quality control method, quality of the metal material can be controlled while measuring a solidification position of the metal material (for example, a cast piece manufactured by casting a metal material) using the solidification position measurement method.

### <Metal Material Manufacturing Facility and Casting Facility>

The above-described measurement apparatus can also be applied to, for example, a metal material manufacturing facility. In the metal material manufacturing facility, the metal material can be manufactured while measuring a specific physical quantity using the above-described measurement apparatus.

The above-described defect measurement apparatus can also be applied to, for example, a metal material manufacturing facility. In the metal material manufacturing facility, the metal material can be manufactured while measuring a defect on the surface layer and/or in the inside of the metal material by the above-described defect measurement apparatus.

The above-described solidification position measurement apparatus can also be applied to, for example, a metal material manufacturing facility. In the metal material manufacturing facility, the metal material can be manufactured while measuring a solidification position of the metal material (for example, a cast piece manufactured by casting a metal material) by the above-described solidification position measurement apparatus.

In addition, the above-described solidification position measurement apparatus can also be applied to, for example, a casting facility such as a continuous casting facility. In the above-described casting facility, a cast piece can be manufactured while measuring a solidification position of the cast piece using the above-described electromagnetic ultrasonic sensor. Alternatively, quality control of the cast piece can be performed by measuring the solidification position of the cast piece using the above-described electromagnetic ultrasonic sensor. Here, the casting facility refers to both a case where there is only one apparatus for casting a metal material and a case where a plurality of apparatuses for casting a metal material are combined.

Furthermore, in the metal material manufacturing facility provided with the above-described casting facility, a metal material can be manufactured from the cast piece manufactured by the above-described casting facility.

### <Metal Material Manufacturing Method Part 2>

The above-described casting facility can also be applied to, for example, a metal material manufacturing method. In the metal material manufacturing method, the metal material can be manufactured while measuring a solidification position using the above-described casting facility provided with the above-described solidification position measurement apparatus.

### <Metal Material Quality Control Method Part 2>

The above-described casting facility can also be applied to, for example, a metal material quality control method. In the metal material quality control method, quality of the metal material can be controlled while manufacturing a cast piece using the above described casting facility provided with the above-described solidification position measurement apparatus.

With the Halbach array magnet, the electromagnetic ultrasonic sensor, the defect measurement apparatus, the defect measurement method, the metal material manufacturing method, the metal material quality control method, the metal material manufacturing facility, the solidification position measurement apparatus, the solidification position measurement method, and the casting facility according to the present embodiment described above, the Halbach array magnet can be fixed by a fixing jig without using an adhesive or a frame. Therefore, even in a repeated heat load or in a water-cooling environment, it is possible to fix each magnet arranged, and reliability and sensor life can be ensured.

Note that in the present invention, when the "metal material" is a "steel material", the above effect can be reliably obtained, which is most preferable. In addition, when the "casting facility" is "continuous casting facility", the above effect can be maximized, which is most preferable.

Note that in the Halbach array magnet, only the Halbach array magnet exists, and all the magnets may be fixed by a fixing jig. In addition, in the Halbach array magnet, other magnets may be coupled to the Halbach array magnet, and all the magnets may be fixed by a fixing jig, or only the Halbach array magnet may be fixed by a fixing jig.

Hereinabove, the Halbach array magnet, the electromagnetic ultrasonic sensor, the defect measurement apparatus, the defect measurement method, the metal material manufacturing method, the metal material quality control method, the metal material manufacturing facility, the solidification position measurement apparatus, the solidification position measurement method, and the casting facility according to the present invention have been specifically described by the embodiments and examples for carrying out the invention, but the gist of the present invention is not limited to these descriptions, and should be widely interpreted on the basis of the description of the claims. In addition, it is obvious that various changes, modifications, and the like based on these descriptions are also included in the gist of the present invention.

### Reference Signs List

1, 100 ELECTROMAGNETIC ULTRASONIC SENSOR
2 MAIN MAGNET
3 AUXILIARY MAGNET
4 YOKE
5 MEASUREMENT TARGET
10 HALBACH ARRAY MAGNET
11 LONGITUDINAL WAVE COIL
12 TRANSVERSE WAVE COIL
20 HOLE
21 THROUGH PIN
30, 40 GROOVE
31, 41 ENGAGEMENT MEMBER
110 CONVENTIONAL ARRAY MAGNET

## Claims

1. A Halbach array magnet comprising:
a magnet unit in which a plurality of magnets is arranged in a Halbach array;
a fixing jig that is one or a plurality of non-magnetic materials, the fixing jig being configured to at least fix each of the magnets of the magnet unit; and
a yoke that is a magnetic material and is provided on a different side of biased magnetic field formed by the magnet unit.

2. The Halbach array magnet according to claim 1, wherein the fixing jig:
has a columnar shape; and
is arranged so as to penetrate all of the magnets.

3. An electromagnetic ultrasonic sensor comprising:
a magnet unit in which a plurality of magnets is arranged in a Halbach array;
a fixing jig that is one or a plurality of non-magnetic materials, the fixing jig being configured to at least fix each of the magnets of the magnet unit; and
a yoke that is a magnetic material and is provided on a surface side different from a side where a magnetic field formed by the magnet unit is biased.

4. The electromagnetic ultrasonic sensor according to claim 3, wherein the fixing jig:
has a columnar shape; and
is arranged so as to penetrate all of the magnets.

5. A defect measurement apparatus comprising the electromagnetic ultrasonic sensor according to claim 3 or 4.

6. A defect measurement method using the electromagnetic ultrasonic sensor according to claim 3 or 4.

7. A metal material manufacturing method comprising
manufacturing a metal material while measuring a specific physical quantity by the measurement method according to claim 6.

8. A metal material quality control method comprising
controlling quality of a metal material while measuring a specific physical quantity by the measurement method according to claim 6.

9. A metal material manufacturing facility comprising
the measurement apparatus according to claim 5, wherein
the metal material manufacturing facility is configured to manufacture a metal material while measuring a specific physical quantity by the measurement apparatus.

10. A solidification position measurement apparatus comprising
the electromagnetic ultrasonic sensor according to claim 3 or 4, wherein
the solidification position measurement apparatus is configured to measure a solidification position of a metal material by the electromagnetic ultrasonic sensor.

11. A solidification position measurement method comprising
the electromagnetic ultrasonic sensor according to claim 3 or 4, wherein
the solidification position measurement method comprises
measuring a solidification position of a metal material by the electromagnetic ultrasonic sensor.

12. A casting facility comprising
the solidification position measurement apparatus according to claim 10, wherein
the casting facility is configured to manufacture a cast piece while measuring a solidification position of the cast piece by the solidification position measurement apparatus.

13. A metal material manufacturing facility comprising
the solidification position measurement apparatus according to claim 10, wherein
the metal material manufacturing facility is configured to manufacture a metal material while measuring a solidification position by the solidification position measurement apparatus.

14. A metal material manufacturing method of manufacturing a metal material while manufacturing a cast piece using the casting facility according to claim 12.

15. A metal material quality control method of controlling quality of a metal material while manufacturing a cast piece using the casting facility according to claim 12.
